# EUROPÄISCHE PATENTANMELDUNG

(11) **EP 1 502 491 A1**
(43) Veröffentlichungstag der Anmeldung: **02.02.2005**
(21) Anmeldenummer: 04014288.7
(22) Anmeldetag: 18.06.2004
(51) Int. Cl.: A01D 33/02

(54) **Zupfwalze**

(30) Priorität: 29.07.2003 DE 10334864
(71) Anmelder: Holmer Maschinenbau GmbH, 84069 Eggmühl (DE)
(72) Erfinder: Holmer, Alfons, 84069 Eggmühl (DE)
(74) Vertreter: Graf, Helmut, Dipl.-Ing.

(57) **Zusammenfassung**

Die Erfindung bezieht sich auf eine neuartige Zupfwalze zur Verwendung bei einer Kraut-Trenneinrichtung, wobei die Zupfwalze an ihrer Umfangsfläche elastische Segmente aufweist, die beim Vorbeibewegen an einer Gegenwalze der Kraut-Trenneinrichtung elastisch verformbar sind.

## Beschreibung

Die Erfindung bezieht sich auf eine Zupfwalze gemäß Oberbegriff Patentanspruch 1.

Zupfwalzen für Kraut-Trenneinrichtungen sind bekannt. Es ist auch bekannt, wie z.B. aus der DE 298 23 546 U1, derartige Zupfwalzen an ihrer mit einer Gegenwalze der Kraut-Trenneinrichtung zusammenwirkenden Außenfläche mit elastischen Segmenten zu versehen, nämlich mit elastischen Fingern, die beim Vorbeibewegen an der Gegenwalze jeweils elastisch verformt bzw. bezogen auf die Achse der Zupfwalze radial nach innen gedrückt werden. Erreicht werden soll hierdurch eine Selbstreinigung des von den elastischen Fingern gebildeten Zupfwalzenumfangs. Die Praxis hat allerdings gezeigt, daß sich speziell bei ungünstigen Bodenverhältnissen die Zupfwalze an ihrem Außenumfang mit Bodenmaterial usw. zulegt, so daß eine Bewegung der elastischen Finger und damit auch die angestrebte Selbstreinigung nicht mehr möglich sind.

Aufgabe der Erfindung ist es, eine Zupfwalze aufzuzeigen, die diesen Nachteil vermeidet und eine hohe Betriebssicherheit gewährleistet.

Zur Lösung dieser Aufgabe ist eine Zupfwalze entsprechend dem Patentanspruch 1 ausgebildet.

Bei der erfindungsgemäßen Zupfwalze sind die elastischen Elemente keine Finger, sondern elastische Profilabschnitte oder Wandabschnitte, die zumindest einen Teil des Umfangs bzw. der geschlossenen Umfangs- oder Walzenfläche der Zupfwalze bilden. Weiterhin weist die Zupfwalze wenigstens einen zumindest zum Außenumfang der Zupfwalze hin dicht verschlossenen Raum auf, in den sich die elastischen Profilelemente durch elastisches Verformen mit wenigstens einem Profilabschnitt hineinbewegen können.

Jedes Profilelement besitzt weiterhin an diesem Profilabschnitt wenigstens einen Bereich, der über den sonstigen Umfang der Zupfwalze vorsteht, so daß beim Vorbeibewegen an der Gegenwalze das jeweilige Profilelement bzw. dessen Profilabschnitt elastisch radial nach innen in Richtung der Zupfwalzenachse hin verformt wird und somit an der Zupfwalze anhaftende Fremdstoffe, insbesondere feuchtes und klebendes Bodenmaterial von der Zupfwalze entfernt und somit eine Selbstreinigung der Zupfwalze erzielt wird. Da der Hohlraum nach außen hin verschlossen und damit auch ein Eindringen von Fremdstoffen (z.B. Bodenmaterial, Steine usw.) in diesen Hohlraum nicht möglich ist, ist die Bewegungsfreiheit bzw. Verformbarkeit des jeweiligen Profilelementes für die Selbstreinigung stets gewährleistet.

In den Unteransprüchen 2 - 16 sind besonders vorteilhafte Ausführungsformen der erfindungsgemäßen Zupfwalze nach Anspurch 1 angegeben.

Bei einer bevorzugten Ausführungsform der Erfindung ist der wenigstens eine vorstehende Bereich beispielsweise als leistenartiger Vorsprung an der Außenfläche des Profilelementes derart ausgebildet, daß das Verformen des jeweiligen Profilelementes beim Vorbeibewegen an der Gegenwalze zeitlich versetzt an unterschiedlichen Punkten des Profilelementes erfolgt, so daß es in einer Art Walkbewegung verformt und dadurch der Selbstreinigungseffekt noch gesteigert wird. Hierfür ist bei einer Ausführungsform der Erfindung der wenigstens eine leistenartige Vorsprung schräg zu einer Mantellinie der Zupfwalze verlaufend vorgesehen.

Bei einer bevorzugten Ausführungsform sind mehrere leistenartige Vorsprünge am Profilelenent vorgesehen, die dann bevorzugt jeweils schräg zur Längserstreckung des Profilelementes bzw. schräg zur Zupfwalzenachse verlaufen.

Die Erfindung wird im Folgenden anhand der Figuren an einem Ausführungsbeispiel näher erläutert. Es zeigen:
- Fig. 1: eine Kraut-Trenneinrichtung einer Maschine zum Roden von Wurzelfrüchten, mit zwei in Förderrichtung des Erntegutes aufeinander folgenden Zupfwalzen mit jeweils zugehöriger Gegenwalze;
- Fig. 2: in vergrößerter Darstellung einen Schnitt durch eine der Zupfwalzen der Trenneinrichtung der Figur 1;
- Fig. 3 und 4: eines der Profilelemente der Zupfwalze der Figur 2.

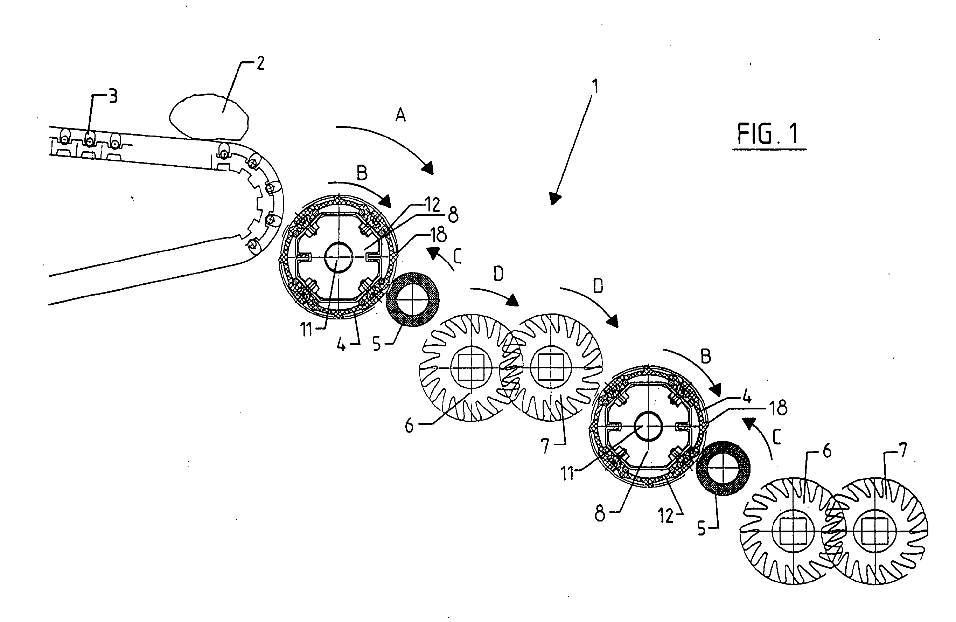

Der in der Figur 1 allgemein mit 1 bezeichneten Kraut-Trenneinrichtung wird das Erntegut 2 (beispielsweise Kartoffeln oder Zuckerrüben) an einem Einlauf über einen Transporteur 3 in Form eines Siebbandes in der Transportrichtung A zugeführt. Das Erntegut 2 verläßt die Kraut-Trenneinrichtung 1 an dem in der Figur 1 rechten Ende bzw. an dem dortigen Auslauf über einen weiteren, nicht dargestellten Transporteur, beispielsweise in Form eines Siebbandes. Die zwischen dem Einlauf und dem Auslauf der Kraut-Trenneinrichtung gebildete Förderstrecke umfaßt u.a. zwei Zupfwalzen 4 mit jeweils einer zugehörigen Gegenwalze 5, die gegen einander anliegen und jeweils gegenläufig um eine horizontale, senkrecht zur Transportrichtung A verlaufende Achse angetrieben sind, wie dies mit den Pfeilen B und C angedeutet ist. In Bezug auf die Transportrichtung A befindet sich die Zupfwalze 4 jeweils vor ihrer zugehörigen Gegenwalze 5, so daß die Zupfwalze 4 gleichsinnig mit der Transportrichtung A (Pfeil B) und die Gegenwalze 5 der Transportrichtung A entgegengesetzt (Pfeil C) umlaufen. Zwischen der in Transportrichtung A ersten Gegenwalze 5 und der nächstfolgenden Zupfwalze 4 weist die Transportstrecke der Kraut-Trenneinrichtung 1 zwei ebenfalls um die horizontale, senkrecht zur Transportrichtung A verlaufende Achse umlaufend angetriebene Förder- oder Sternwalzen 6 und 7 auf, die beide gleichsinnig umlaufen, und zwar auch gleichsinnig mit der Transportrichtung, wie dies mit den Pfeilen D angedeutet ist. Zwei weitere Sternwalzen 6 und 7 bilden den Auslauf der der Kraut-Trenneinrichtung 1.

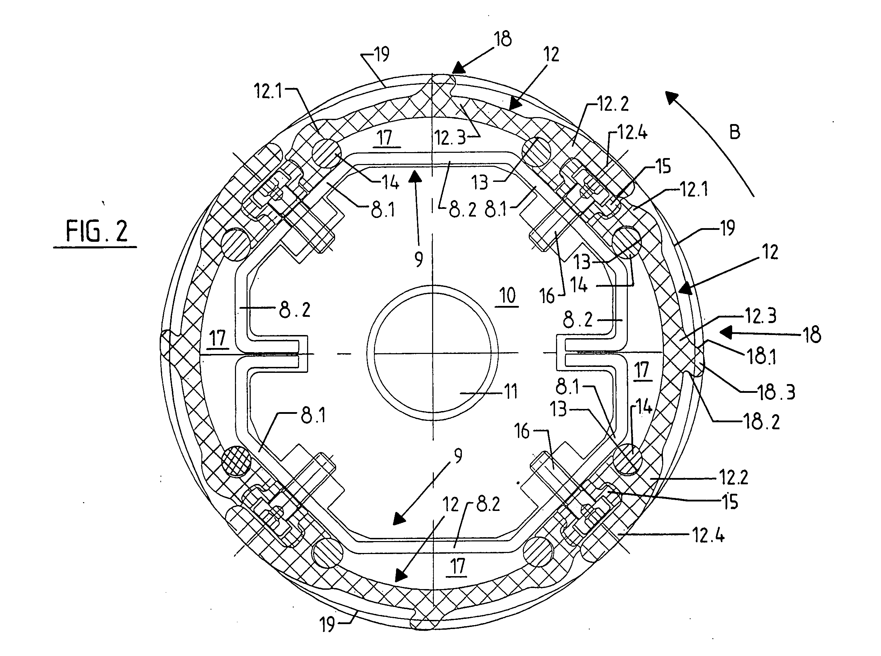

Während jede Gegenwalze 5 an ihrer Umfangs- bzw. Mantelfläche glatt und kreiszylinderförmig ausgebildet ist, besitzt jede Zupfwalze 4 eine spezielle Konstruktion, wie sie insbesondere auch in den Figuren 2 - 4 dargestellt ist und nachstehend im Zusammenhang mit diesen Figuren beschrieben wird.

Durch die gegenläufig angetriebenen Zupf- und Gegenwalzen gelangt mit dem Erntegut 2 mitgeführtes und/oder am Erntegut haftendes Kraut in den Spalt zwischen der jeweiligen Zupfwalze 4 und der Gegenwalze 5 und wird somit aus dem Erntegut 2 entfernt.

Die Zupfwalze 4 besteht bei der dargestellten Ausführungsform aus einer Nabe 8, die im Querschnitt an ihrer Außenfläche als Achteck ausgebildet ist, und zwar mit Umfangsseiten 8.1 und Umfangsseiten 8.2 gleicher Länge, wobei in einer angenommenen Umfangsrichtung, beispielsweise in Drehrichtung B die Umfangsseiten 8.1 und 8.2 einander abwechseln, und zwar derart, daß jeweils auf eine Umfangsseite 8.1 eine Umfangsseite 8.2 und auf diese wiederum eine Umfangsseite 8.1 folgen. Bei der dargestellten Ausführungsform besteht die Nabe 8 aus zwei identischen Profilen 9 aus Stahlblech sowie aus wenigstens zwei Scheiben 10 aus Stahlblech, die mit den Profilen 9 zu der am Außenumfang achteckigen Nabe 8 miteinander verschweißt sind. Mit den Scheiben 10 ist die Nabe 8 auf einer die Zupfwalze 4 antreibenden Welle 11 befestigt. Die Außen- bzw. Walzenfläche der Zupfwalze 4 ist von mehreren Profilelementen 12 aus einem gummielastischen Material gebildet. Diese Profilelemente 12 erstrecken sich bei der dargestellten Ausführungsform mit ihrer Längsachse L jeweils über die gesamte axiale Länge der Zupfwalze 4 bzw. Nabe 8.

Jedes Profilelement 12 ist an beiden Längsseiten jeweils an einer Umfangsseite 8.1 mit seinem parallel zur Achse der Zupfwalze 4 verlaufenden Längsseite bzw. mit dem dortigen Randbereich befestigt, der von einem Profilabschnitt 12.1 bzw. 12.2 gebildet ist, und überbrückt mit einem an der Außenseite der Zupfwalze konvex gewölbten Profilabschnitte 12.3 eine zwischen den beiden Seiten 8.1 liegende Seite 8.2 der achteckigen Außenfläche der Nabe 8. Bezogen auf die Drehrichtung B eilt der Profilabschnitt 12.1 jeweils dem Profilabschnitt 12.3 und dem Profilabschnitt 12.2 voraus.

Für die Befestigung der Profilelemente 12 hintergreifen diese jeweils an der Innenseite und an den Profilabschnitten 12.1 und 12.2 mit dort eingeformten Ausnehmungen 13 Halteleisten 14, die sich jeweils über die gesamte Länge der Nabe 8 parallel zur Achse der Zupfwalze 4 erstrecken und an den beiden Enden jeder Umfangsseiten 8.1 in der Nähe des Übergangs zur anschließenden Umfangsseite 8.2 vorgesehen sind. Bei der dargestellten Ausführungsform sind die Halteleisten 14 von Rundeisen gebildet, die auf die Außenfläche der Nabe 8 aufgeschweißt sind. Weiterhin sind Klemm- oder Halteleisten 15 vorgesehen, die sich ebenfalls über die gesamte Länge der Nabe 8 und parallel zur Achse der Zupfwalze 4 erstrecken und die die Profilelemente jeweils an ihren Enden im Bereich der Profilabschnitte 12.1 und 12.2 u.a. auch derart übergreifen, daß jedes Profilelement 12 an seinen beiden Profilabschnitten 12.1 und 12.2 oder parallel zur Zupfwalzenachse verlaufenden Längsseiten zwischen der Halteleiste 14 und der Klemmleiste 15 formschlüssig an der Nabe 8 eingespannt ist, und zwar u.a. sowohl radial zur Achse der Zupfwalze 4, als auch tangential und in Achsrichtung dieser Zupfwalze. Für die Klemmleisten 15 sind mehrere, in Gewinde der Nabe 8 eingreifende Schrauben 16 vorgesehen. Jede Klemmleiste 15 ist für die vom Profilabschnitt 12.1 gebildete Längsseite eines Profilelementes 12 und für die von dem Profilabschnitt 12.2 gebildete Längsseite eines anschließenden Profilelementes 12 gemeinsam.

Zum Abdecken der Klemmleisten 15 und der Schrauben 16 ist an jedem Profilelement 12 an den Profilabschnitt 12.2 anschließend ein lappenartiger, elastisch verformbarer Profilabschnitt 12.4 angeformt, der die jeweilige Klemmleiste 15 und die zugehörigen Schrauben 16 vollständig abdeckt und zum Festziehen oder Lösen der Schrauben 16 angehoben werden kann.

Durch den achteckigen Außenquerschnitt der Nabe 8 und durch den gewölbten Profilabschnitt 12.3 ist zwischen der jeweiligen Umfangsseite 8.2 und dem benachbarten Profilelement 12 ein Hohlraum 17 gebildet, der in der Achsrichtung radial zur Achse der Zupfwalze 4 eine relativ große radiale Tiefe aufweist und sich über die gesamte Länge der Nabe 8 erstreckt. Durch die beschriebene Befestigung der Profilelemente am Umfang der Nabe 8 sind die Hohlräume 17 insbesondere auch an den beiden, von den Profilabschnitten 12.1 und 12.2 gebildeten Längsseiten der Profilelemente 12 hermetisch dicht zum Umfang der Zupfwalze 4 verschlossen. Die Hohlräume 17 sind an den beiden Enden der Zupfwalze 4 beispielsweise durch Scheiben gegen ein Eindringen von Fremdstoffen (z.B. Erde, Steine usw.) verschlossen.

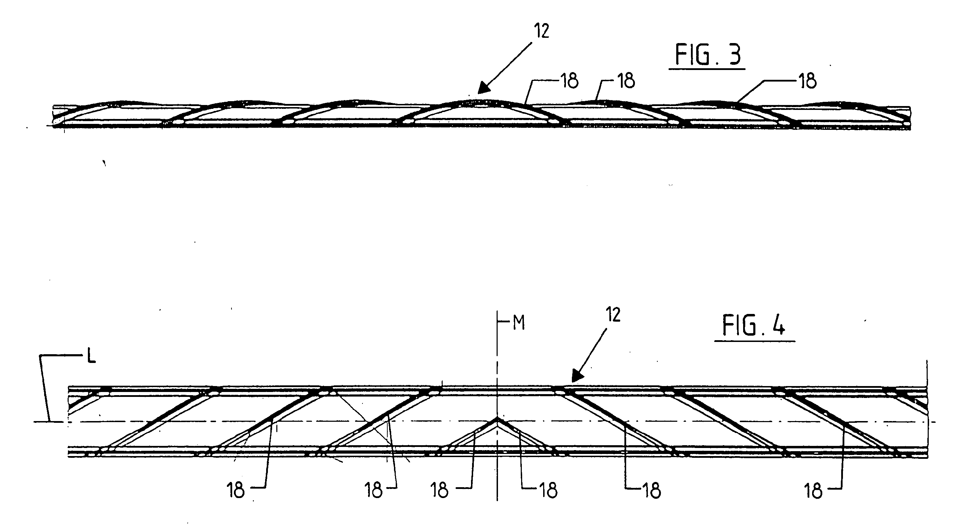

An der Außenfläche sind die Profilelemente 12 mit mehreren z.B. angeformten wulstoder lippenartigen Vorsprüngen 18 versehen, die entsprechend den Figuren 3 und 4 jeweils schräg zur Längsachse L des jeweiligen Profilelementes 12 verlaufen, und zwar derart, daß diese Vorsprünge 18 hinsichtlich ihres Verlaufs spiegelsymmetrisch zu einer Mittelebene M vorgesehen sind, die senkrecht zur Längsachse L angeordnet ist. Der Abstand jedes Vorsprunges 18 von der Mittelebene M nimmt in Richtung von der von dem Profilabschnitt 12.1 gebildeten Längsseite zu der von dem Profilabschnitt 12.2 gebildeten Längsseite hin zu. Bei montiertem Profilelement 12 verlaufen die Vorsprünge 18 also schräg zu einer Mantellinie der Zupfwalze, die (Mantellinie) ihrerseits parallel zur Zupfwalzenachse verläuft.

Die Vorsprünge 18 sind bei der dargestellten Ausführungsform weiterhin so geformt, daß sie in der Schnittdarstellung der Figur 2 ein lippenartiges Profil besitzen, und zwar mit einer bezogen auf die Drehrichtung B vorderen, schräg ansteigenden Vorderseite 18.1 und mit einer überhängenden Rückseite 18.2, die mit der angrenzenden Außenfläche des Profilabschnittes 12.3 einen Winkel kleiner als 90° einschließt, welcher sich entgegen der Drehrichtung B öffnet. Weiterhin sind bei der dargestellten Ausführungsform die Vorsprünge 18 an ihrer Vorderseite 18.1, an ihrer Rückseite 18.2 und eventuell auch an dem dazwischen liegenden freien Randbereich 18.3 leicht gerippt, d.h. mit z.B. abgerundeten, nutenartigen Vertiefungen versehen, deren Längserstreckungen etwa in Ebenen senkrecht zur Zupfwalzenachse liegen.

Mit 19 ist in der Figur 2 ein Kreislinie um die Zupfwalzenachse bezeichnet. Diese Kreislinie bestimmt die Außenfläche der Zupfwalze 4 im Bereich der Profilabschnitte 12.4, d.h. auf diesem Kreisbogen bewegen sich die Profilabschnitte 12.4. Über diesen Kreisbogen 19 und damit über diese von dem Kreisbogen 19 definierte Zupfwalzenaußen- oder Umfangsfläche stehen die Vorsprünge 18 deutlich vor. Dies bedeutet, daß immer dann, wenn beim Umlaufen der Zupfwalze 4 und der Gegenwalze 5 sich ein von einem Profilelement 12 gebildetes Segment der Zupfwalze 4 an der Gegenwalze 5 abwälzt, der Profilabschnitt 12.3 dieses Segmentes bzw. Profilelementes 12 durch die gegen die Gegenwalze 5 anliegenden Vorsprünge 18 federnd in den Hohlraum 17 hinein gedrückt wird, und zwar durch den beschriebenen Verlauf der Vorsprünge 18 an sich ständig ändernden Bereichen des betreffenden Profilelementes, so bei umlaufender Zupfwalze 4 also eine ständige Walk-Bewegung der Profilelemente 12 erfolgt.

Durch die Profilelemente 12 wird somit nicht nur ein zuverlässiges und optimales Einklemmen und Mitführen von Kraut in dem zwischen der Zupfwalze 4 und der Gegenwalze 5 gebildeten Spalt und damit ein zuverlässiges Entfernen von Kraut aus dem Erntegutstrom erreicht, wobei auch hierbei die Vorsprünge 18 das Mitführen von Kraut unterstützen, sondern gleichzeitig wird durch den beschriebenen Walkvorgang die Selbstreinigung der Zupfwalze 4 zuverlässig erreicht, d.h. an dieser Walze eventuell anhaftendes Bodenmaterial platzt durch den Walkvorgang von dem Umfang der Zupfwalze 4 wieder ab, so daß ein Zusetzen der Zupfwalze 4 wirksam vermieden ist.

Durch die nach außen hin geschlossenen Hohlräume 17 ist die für die Walkbewegung notwendige Freiheit für der Profilabschnitte 12.3 gewährleistet. Durch die Wölbung der Profilelemente 12 ist trotz der elastischen Ausbildung dieser Profilelemente die für das Entfernen von Kraut notwendige Anpreßkraft der Zupfwalze 4 gegen die Gegenwalze 5 erreicht.

Bei der dargestellten Ausführungsform sind die Profilelemente 12 auch im noch nicht eingebauten Zustand leicht vorgewölbt. Grundsätzlich besteht die Möglichkeit, die Anpreßkraft zwischen Zupfwalze 4 und Gegenwalze 5 dadurch zu erhöhen, daß die Profilelemente 12 im nicht eingebauten Zustand im wesentlichen flach sind und ihre Wölbung erst durch den Einbau erhalten. Die Profilelemente 12 bestehen aus einem gummielastischen Material, beispielsweise aus einem thermoplastischen Kunststoff, z.B. Polyurethan.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrunde liegende Erfindungsgedanke verlassen wird. So ist es beispielsweise möglich, anstelle von leistenartigen Vorsprüngen 18 auch andere, über die sonstige Außenfläche der Segmente oder Profilelemente 12 vorstehende Vorsprünge, beispielsweise noppenartige Vorsprünge usw. vorzusehen, wenngleich durch die leistenartigen Vorsprünge 18 auch das Entfernen von Kraut besonders gefördert wird. Weiterhin ist es auch möglich, mehrere Segmente oder Profilelemente 12 in Längsrichtung der Zupfwalze 4 aufeinander folgend vorzusehen.

### Bezugszeichenliste

- 1: Kraut-Trenneinrichtung
- 2: Erntegut
- 3: Siebband
- 4: Zupfwalze
- 5: Gegenwalze
- 6, 7: Förderwalze
- 8: Nabe
- 8.1, 8.2: Außenfläche der Nabe 8
- 9: Profil
- 10: Scheibe
- 11: Welle
- 12: flexibles Segment oder Profilelement
- 12.1 - 12.4: Profilabschnitt
- 13: Ausnehmung
- 14: Halteleiste
- 15: Klemmleiste
- 16: Schraube
- 17: Hohlraum
- 18: wulst- oder leistenartiger Vorsprung
- 18.1: Vorderseite des Vorsprunges
- 18.2: Rückseite des Vorsprunges
- 18.3: freier Rand des Vorsprunges
- 19: Kreisbogen
- A: Förderrichtung
- B, C, D: Drehrichtung

## Patentansprüche

1. Zupfwalze zur Verwendung bei einer Kraut-Trenneinrichtung (1), wobei die Zupfwalze (4) an ihrer Umfangsfläche elastische Segmente aufweist, die beim Vorbeibewegen an einer Gegenwalze der Kraut-Trenneinrichtung (1) elastisch verformbar sind, **dadurch gekennzeichnet,**
**daß** die elastischen Segmente zumindest einen Teil der Umfangsfläche der Zupfwalze (4) bildende und an der Außenfläche um wenigstens eine Achse parallel zur Zupfwalzenachse konvex gewölbte Profilelemente (12) sind,
**daß** die Zupfwalze (4) wenigstens einen zumindest am Umfang der Zupfwalze (4) dicht verschlossenen Hohlraum (17) aufweist, in welchen sich jedes Profilelement (12) wenigstens mit einem Profilabschnitt (12.3) unter elastischer Verformung radial nach innen bewegen kann, und
**daß** jedes Profilelement (12) an dem Profilabschnitt (12.3) wenigstens einen Bereich (18) aufweist, mit dem dieses Profilelement über den Umfang (19) der Zupfwalze (4) vorsteht.

2. Zupfwalze nach Anspruch 1, **dadurch gekennzeichnet, daß** die Profilelemente (12) in Umfangsrichtung der Zupfwalze unmittelbar aufeinander folgen.

3. Zupfwalze nach Anspruch 1 oder 2, **dadurch gekennzeichnet, daß** die Profilelemente (12) an einer Nabe (8) der Zupfwalze (4) derart befestigt sind, daß jedes Profilelement (12) zwischen einer Außenfläche (8.2) der Nabe (8) und seiner der Nabe zugewandten Innenseite einen nach außen hin verschlossenen Hohlraum (17) bildet,
wobei beispielsweise
die Nabe (8) der Zupfwalze (4) einen polygonartigen Außenquerschnitt aufweist, jedes Profilelement (12) beispielsweise an zwei beispielsweise parallel zur Achse der Zupfwalze verlaufenden Längsseiten an jeweils einer ersten Umfangseite (8.1) der Außenfläche der Nabe (8) befestigt ist und beispielsweise die beiden ersten Seiten (8.1) durch wenigstens eine weitere Umfangsseite (8.2) getrennt sind.

4. Zupfwalze nach einem der vorhergehenden Ansprüche, **dadurch gekennzeichnet, daß** der über den Umfang (19) vorstehende Bereich jedes Profilelementes (12) von wenigstens einem Vorsprung, beispielsweise von einem leistenartigen Vorsprung (18) gebildet ist,
wobei der wenigstens eine Vorsprung (18) beispielsweise schräg zu einer Mantellinie der Zupfwalze (4) verläuft und/oder strukturiert ist, d.h. beispielsweise mit Rippen versehen ist.

5. Zupfwalze nach einem der vorhergehenden Ansprüche, **dadurch gekennzeichnet, daß** mehrere Vorsprünge, vorzugsweise mehrere leistenartige Vorsprünge (18) an der Außenseite jedes Profilelementes (12) vorgesehen sind.

6. Zupfwalze nach einem der vorhergehenden Ansprüche, **dadurch gekennzeichnet, daß** das jeweilige Profilelement (12) bezüglich des Verlaufs der Vorsprünge (18) spiegelsymmetrisch zu einer Mittelebene (M) ausgeführt ist, die senkrecht zur Zupfwalzenachse angeordnet ist.

7. Zupfwalze nach einem der vorhergehenden Ansprüche, **dadurch gekennzeichnet, daß** der wenigstens eine Vorsprung (18) im Querschnittsprofil lippenartig ausgebildet ist, beispielsweise mit einer schräg ansteigenden Vorderseite (18.1), einer überhängenden Rückseite (18.2) und einem zwischen diesen beiden Seiten gebildeten freien Rand (18.3).

8. Zupfwalze nach einem der vorhergehenden Ansprüche, **gekennzeichnet durch** eine austauschbare Befestigung der Profilelemente (12) an der Zupfwalze (4) oder deren Nabe (8).

9. Zupfwalze nach einem der vorhergehenden Ansprüche, **dadurch gekennzeichnet, daß** die Profilelemente (12) an mit der Nabe (8) verbundenen Halteleisten (14) und/oder an mit der Nabe verschraubten Klemmleisten (15) gehalten sind,
wobei beispielsweise die Klemmleiste (15) durch einen an die Profilelemente (12) angeformten elastischen Profilabschnitt (12.4) abgedeckt ist.

10. Zupfwalze nach einem der vorhergehenden Ansprüche, **dadurch gekennzeichnet, daß** sich die Profilelemente (12) jeweils über die gesamte Länge der Zupfwalze (4) erstrecken,
und/oder
daß vier Profilelemente (12) vorgesehen sind,
und/oder
daß die Profilelemente (12) aus einem dauer- oder gummielastischen Material hergestellt sind, beispielsweise aus einem Kunststoff-Elastomer, z.B. Polyurethan.
